# FASCICULE DE BREVET EUROPEEN

(11) **EP 3 251 905 B1**
(45) Date de publication et mention de la délivrance du brevet: **10.04.2019**
(21) Numéro de dépôt: 17169382.3
(22) Date de dépôt: 04.05.2017
(51) Int. Cl.: B60S 1/40

(54) **ADAPTATEUR DE RACCORDEMENT DE L'EXTRÉMITÉ LIBRE D'UN BRAS D'ESSUIE-GLACE, ENSEMBLE COMPORTANT UN TEL ADAPTATEUR ET UN BRAS D'ESSUIE-GLACE**
ANSCHLUSSADAPTER DES FREIEN ENDABSCHNITTS EINES SCHEIBENWISCHERARMS, UND ANORDNUNG, DIE EINEN SOLCHEN ADAPTER UND EINEN SCHEIBENWISCHERARM UMFASST
ADAPTER FOR ATTACHING THE FREE END OF A WINDSCREEN WIPER ARM, ASSEMBLY COMPRISING SUCH AN ADAPTER AND A WINDSCREEN WIPER ARM

(30) Priorité: 31.05.2016 FR 1654893
(43) Date de publication de la demande: 06.12.2017
(73) Titulaire: Valeo Systèmes d'Essuyage, 78322 Le Mesnil Saint Denis (FR)
(72) Inventeur: GAUCHER, Vincent, 63500 ISSOIRE (FR); HOUSSAT, Stéphane, 63500 ISSOIRE (FR); JOMARD, Olivier, 63500 ISSOIRE (FR)
(74) Mandataire: Callu-Danseux, Violaine

(56) Documents cités:
- WO-A2-2009/016569
- US-A1- 2014 150 199
- US-B1- 6 658 690

## Description

### DOMAINE TECHNIQUE DE L'INVENTION

L'invention concerne un adaptateur, aussi appelé pièce de raccordement, utilisé pour raccorder l'extrémité libre d'un bras d'essuie-glace à un élément d'une structure de support d'une lame d'essuyage d'un balai d'essuie-glace.

L'invention concerne aussi un ensemble comportant un tel adaptateur et un bras d'essuie-glace.

### ARRIERE PLAN TECHNIQUE DE L'INVENTION

L'invention concerne plus particulièrement un adaptateur pour raccorder une extrémité en forme de crochet en U du bras d'essuie-glace à un axe d'articulation qui s'étend transversalement entre deux joues latérales parallèles de l'élément de support de la lame d'essuyage, cet élément de support étant par exemple réalisé sous la forme d'un étrier principal d'articulation.

Selon une conception connue d'un tel adaptateur de raccordement, il comporte deux ailes latérales parallèles et opposées dont les faces externes verticales sont prévues pour être reçues transversalement entre les faces internes verticales opposées en vis-à-vis de joues latérales parallèles de l'élément de support et dont les faces internes en vis-à-vis sont prévues pour coopérer avec les bords latéraux parallèles et verticaux du crochet d'extrémité du bras d'essuie-glace.

Dans une telle conception, les ailes latérales sont reliées entre elles par un corps transversal avant qui se prolonge longitudinalement vers l'arrière par deux branches opposées et qui délimite un logement de palier dans lequel peut être introduit l'axe d'articulation.

Le corps avant est délimité par une surface cylindrique externe convexe qui peut être reçue dans un fond concave complémentaire du crochet en U de l'extrémité du bras d'essuie-glace.

Un tel type d'adaptateur est satisfaisant et permet notamment de réaliser de manière simple le montage d'un balai d'essuie-glace sur l'extrémité libre en forme de crochet en U du bras d'essuie-glace.

De manière connue, la partie principale du corps du bras d'essuie-glace et sa portion d'extrémité en forme de crochet en U sont réalisées sous la forme d'une barre métallique pliée de section rectangulaire dont la largeur transversale correspond sensiblement à la distance séparant les faces internes opposées en vis-à-vis des ailes latérales de l'adaptateur.

Toutefois, une telle conception d'un adaptateur ne permet pas, à l'aide du même adaptateur, de monter un balai d'essuie-glace sur des bras d'essuie-glace de dimensions différentes et notamment lorsque la largeur transversale de la portion d'extrémité en forme de crochet en U est différente d'un bras d'essuie-glace à l'autre.

Afin de s'adapter notamment à aux moins deux gammes de largeurs transversales différentes de l'extrémité en forme de crochet d'un bras d'essuie-glace, le document US-A1-2014/0150199 propose une conception d'un adaptateur comportant un corps destiné à être reçu dans un fond concave du crochet d'extrémité et deux ailes latérales verticales entre lesquelles le corps s'étend transversalement et dont les faces internes en vis-à-vis sont espacées transversalement d'une première distance pour coopérer avec des faces latérales externes d'un premier crochet d'extrémité d'une première largeur transversale, par exemple égale à 12mm.

Pour l'adaptation à un deuxième crochet d'extrémité d'une deuxième largeur transversale - inférieure à ladite première largeur transversale et par exemple égale à 9mm - l'adaptateur comporte une languette latérale de rattrapage de jeu qui est déformable élastiquement, qui comporte une facette interne verticale, qui est adjacente à une face interne d'une des deux ailes latérales et qui est espacée transversalement de la face interne de l'autre des deux ailes latérales d'une deuxième distance inférieure à ladite première distance, pour coopérer avec les faces latérales externes du deuxième crochet.

La languette est déformable élastiquement entre une position de repos qu'elle occupe lorsque le corps est reçu dans le fond concave d'un deuxième crochet d'extrémité de la deuxième largeur transversale, et une position fléchie qu'elle occupe lorsque le corps est reçu dans le fond concave d'un premier crochet d'extrémité de la première largeur transversale.

Lorsque l'adaptateur est utilisé en association avec un deuxième crochet de la plus petite largeur transversale, une telle conception a notamment pour inconvénient d'induire un déséquilibre géométrique et mécanique dans le raccordement de l'extrémité en forme de crochet en U du bras d'essuie-glace à l'axe d'articulation de l'élément de support de la lame d'essuyage.

Un tel déséquilibre peut par exemple aboutir à positionner le balai d'essuie-glace en porte-à-faux transversal par rapport au bras d'essuie-glace. WO-A-2009/016569 montre le préambule de la revendication 1.

L'invention vise à proposer un adaptateur qui permet le montage d'un balai d'essuie-glace sur au moins deux bras d'essuie-glace dont la largeur transversale de la portion d'extrémité libre en forme de crochet en U est différente.

### BREF RESUME DE L'INVENTION

L'invention propose un adaptateur, pour le raccordement d'un balai d'essuie-glace à une extrémité avant en forme de crochet en U d'un bras d'essuie-glace, comprenant ;
- deux ailes latérales verticales dont les faces internes en vis-à-vis sont espacées transversalement d'une première distance, pour coopérer avec des faces latérales externes d'un premier crochet d'extrémité d'une première largeur transversale ;
- un corps de profil externe avant convexe qui s'étend transversalement entre les faces internes des deux ailes ; caractérisé en ce qu'il comporte au moins deux languettes latérales dont chacune est déformable élastiquement et comporte une facette interne verticale, les facettes internes des deux languettes sont espacées transversalement l'une de l'autre d'une deuxième distance inférieure à ladite première distance, pour coopérer avec des faces latérales externes d'un deuxième crochet d'extrémité d'une deuxième largeur transversale et en ce que chaque languette est déformable élastiquement entre :
   - une position de repos qu'elle occupe lorsque l'adaptateur est reçu dans le fond concave d'un deuxième crochet d'extrémité de la deuxième largeur transversale ; et
   - une position fléchie qu'elle occupe lorsque l'adaptateur est reçu dans le fond concave d'un premier crochet d'extrémité de la première largeur transversale.

Selon d'autres caractéristiques de l'invention :
- chaque languette est adjacente à une face interne d'une aile latérale associée ;
- chaque languette est déformable élastiquement dans un plan vertical ;
- lesdites deux languettes sont agencées transversalement en vis-à-vis l'une de l'autre ;

- lesdites facettes des deux languettes sont centrées transversalement par rapport auxdites faces internes des ailes latérales opposées ;
- chaque languette est délimitée par une facette externe orthogonale à ladite facette interne ;
- l'adaptateur comporte un tronçon avant convexe en arc de cylindre, destiné à être reçu dans un fond concave d'un crochet d'extrémité, formé de deux joues latérales internes transversalement opposées dont chacune est adjacente à une face interne d'une aile latérale associée, et chaque languette s'étend dans le prolongement d'une partie associée d'une première joue latérale ;
- le tronçon avant convexe est-semi-cylindrique et, dans la position fléchie de chaque languette, la facette extérieure s'étend dans un plan tangent à une extrémité diamétrale dudit tronçon ;
- l'adaptateur comporte au moins une branche qui s'étend longitudinalement depuis le corps et qui porte un ergot de verrouillage en saillie destiné à être reçu dans une lumière de verrouillage d'un crochet d'extrémité du bras d'essuie-glace ;
- le corps comporte un élément élastique destiné à être monté comprimé élastiquement contre une portion en vis-à-vis du fond concave du crochet d'extrémité ;
- l'adaptateur est réalisé en une seule pièce moulée en matière plastique.
- l'adaptateur présente une symétrie globale de conception selon un plan vertical médian ;
- l'adaptateur présente une symétrie globale de conception selon un plan horizontal médian.

L'invention propose aussi un ensemble comprenant un bras d'essuie-glace comportant une extrémité avant en forme de crochet en U et un adaptateur selon l'invention.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective éclatée qui représente un ensemble selon une conception de l'état de la technique constitué d'un bras d'essuie-glace, d'un adaptateur et d'un étrier principal d'articulation d'une lame d'essuyage ;
- la figure 2 est une vue latérale de détail à grande échelle de la portion d'extrémité avant en forme de crochet en U du bras d'essuie-glace illustré à la figure 1 ;
- la figure 3 est une vue en perspective à grande échelle et en vue de dessus d'un adaptateur du type de celui représenté à la figure 1 selon un exemple de réalisation de l'invention ;
- la figure 4 est une vue en coupe par un plan vertical et longitudinal médian de l'adaptateur représenté à la figure 3 ;
- la figure 5 est une vue de dessus de l'adaptateur de la figure 3 ;
- la figure 6A est une vue analogue à celle de la figure 5 qui illustre l'adaptateur de la figure 3 en position montée dans une portion d'extrémité en forme de crochet en U d'un bras d'essuie-glace d'une deuxième largeur transversale ;
- la figure 6B est une vue de dessous de l'ensemble représenté à la figure 6A ;
- les figure 7A et 7B sont des vues analogues à celles des figures 6A et 6B qui illustrent l'adaptateur de la figure 3 en position montée dans une portion d'extrémité en forme de crochet en U d'un bras d'essuie-glace d'une première largeur transversale, supérieure à la deuxième largeur transversale ;
- la figure 7C est une vue en bout depuis l'avant de l'ensemble représenté à la figure 7A ;
- les figures 8A à 8C sont des vues analogues à celles des figures 7A à 7C qui illustrent l'adaptateur de la figure 3 en position montée dans une portion d'extrémité en forme de crochet en U d'un bras d'essuie-glace d'une deuxième largeur transversale, mais dont la longueur est supérieure à celle de l'extrémité en forme de crochet en U du bras d'essuie-glace représenté aux figures 6A et 6B.

### DESCRIPTION DETAILLEE DES FIGURES

Dans la suite de la description, des éléments présentant une structure identique ou des fonctions analogues seront désignés par des mêmes références.

Dans la suite de la description, on adoptera de manière non limitative et sans référence à la gravité terrestre, des orientations longitudinale, verticale et transversale indiquées par le trièdre "L,V,T" des figures. On définit aussi un plan horizontal qui s'étend longitudinalement et transversalement.

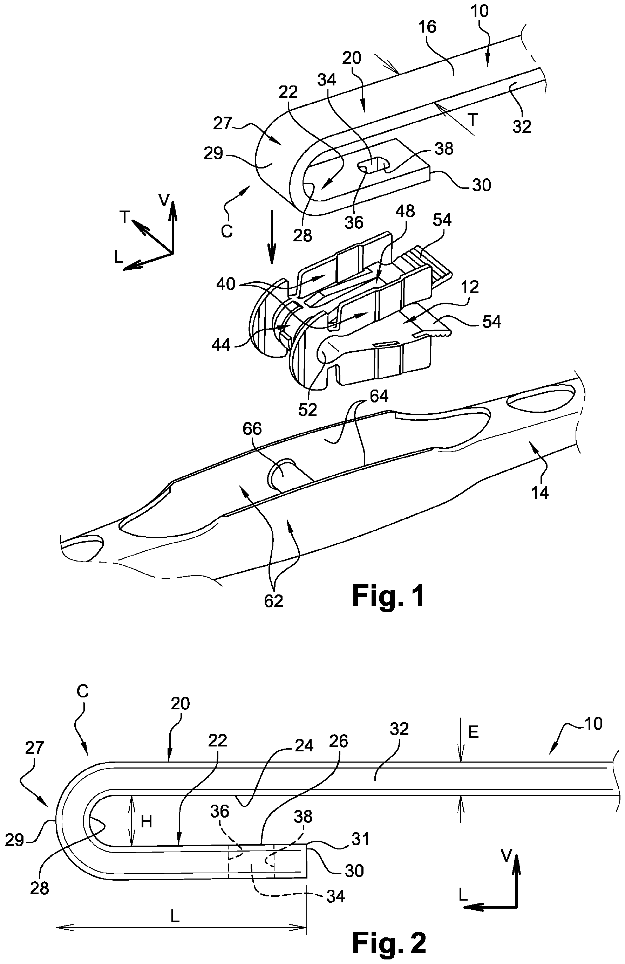

A la figure 1, on a représenté une portion d'un bras d'essuie-glace 10, aussi appelé bras d'entraînement, qui est associé à un adaptateur 12 pour le raccordement mécanique du bras d'essuie-glace 10, ici à un étrier principal 14 de support d'une lame d'essuyage (non représentée) d'un essuie-glace.

La partie longitudinale avant du bras d'essuie-glace 10 représentée notamment aux figures 1 et 2 prolonge le corps principal 16 du bras d'essuie-glace 10 et est conformée en un crochet C en forme de U.

La partie d'extrémité libre en forme de crochet C en U est constituée d'un brin supérieur horizontal 20, d'un brin inférieur horizontal 22 dont chacun est délimité par une face horizontale plane 24, 26 respectivement.

Les deux brins horizontaux parallèles 20 et 22 sont reliés entre eux par un brin d'extrémité longitudinale avant 27 courbe conformé en un arc semi cylindrique qui délimite intérieurement un fond semi cylindrique concave 28.

Le tronçon inférieur 22 est délimité longitudinalement vers l'arrière par une face transversale et verticale d'extrémité arrière 30.

De manière connue, au voisinage de la face d'extrémité arrière 30, le brin inférieur 22 comporte une lumière de verrouillage 34 qui est ici un trou vertical débouchant qui est délimité longitudinalement par un bord d'extrémité avant 36 et par un bord d'extrémité arrière 38 dont chacun est conformé avec un profil arrondi concave.

De manière connue, le bras d'essuie-glace 10 et notamment sa portion d'extrémité avant C en forme de crochet en U, est réalisé sous la forme d'une barre métallique à section transversale rectangulaire (ici à angles arrondis) qui est coupée et pliée, et qui est délimitée transversalement par deux faces latérales verticales externes 32.

Parmi certaines des dimensions caractéristiques de la portion d'extrémité C, on a indiqué à la figure 1 la largeur transversale T séparant les deux faces latérales externes 32, et à la figure 2, la distance longitudinale "L" séparant le bord d'extrémité longitudinale avant du brin recourbé 27 de la face transversale d'extrémité arrière 30 du brin 22 ; la hauteur interne H séparant les face horizontales planes opposées 24, 26, cette hauteur H correspondant au diamètre du fond concave de profil semi-cylindrique circulaire 28 du brin recourbé 27. On a aussi indiqué l'épaisseur "E" de la barre métallique.

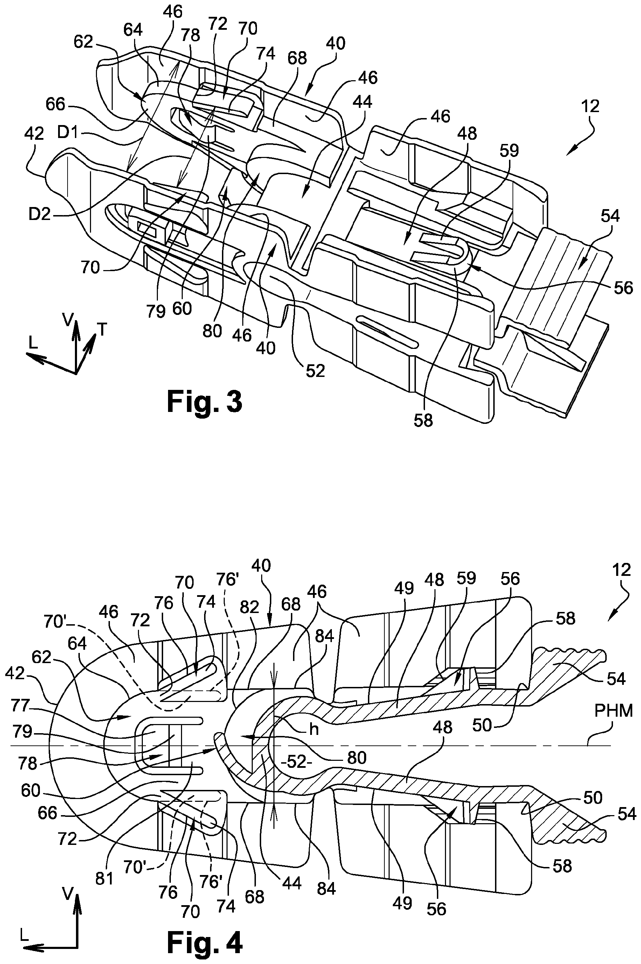

Comme on peut le voir notamment aux figures 3 et 4, l'adaptateur 12 est ici une pièce moulée en une seule pièce en matière plastique qui comporte deux ailes latérales verticales et longitudinales opposées 40 qui, au voisinage de leurs extrémités libres avant à profil arrondi convexe 42, sont reliées entre elles par un corps avant 44 de forme générale cylindrique convexe qui s'étend transversalement entre des portions en vis-à-vis des faces internes opposées 46 des ailes latérales 40.

Le corps avant 44 se prolonge longitudinalement vers l'arrière par deux branches longitudinales sensiblement horizontales 48 dont une branche supérieure et une branche inférieure formant un « V » couché.

Le corps avant 44 est évidé intérieurement et délimite un logement interne cylindrique circulaire concave 52, d'axe géométrique transversal, qui est apte à recevoir une tige d'articulation de profil et de dimension complémentaires appartenant ici à l'étrier d'articulation 14.

L'adaptateur 12 se présente sous la forme d'une "pince" à deux branches 48 qui est déformable élastiquement, par rapport à son état de repos représenté notamment aux figures 1 à 4, pour rapprocher verticalement ou écarter l'une de l'autre les deux branches 48.

Au voisinage de son extrémité longitudinale arrière 50 chaque branche 48 comporte une languette 54 de préhension de manière, en agissant sur au moins une languette, à permettre la déformation de l'adaptateur 12 par rapprochement vertical des branches 48 comme mentionné précédemment.

Sur sa face externe 49, chaque branche 48 comporte un ergot de verrouillage 56 qui est formé en saillie et qui s'étend globalement verticalement vers l'extérieur.

Chaque ergot de verrouillage 56 est dimensionné de manière à pouvoir pénétrer, avec jeu, verticalement à l'intérieur d'une lumière de verrouillage 34 formée dans un brin en vis-à-vis, par exemple ici dans le brin inférieur 22.

L'ergot de verrouillage 56 est délimité longitudinalement vers l'arrière par une face transversale de butée 58 à profil arrondi convexe qui est orientée longitudinalement vers l'arrière et qui est apte à coopérer avec le bord d'extrémité arrière 38 de la lumière de verrouillage 34.

Sur sa surface externe convexe, le corps avant 44 comporte une lame élastique formant ressort 60 qui est apte à coopérer avec une portion en vis-à-vis du fond concave 28 du brin courbé 27 de la portion d'extrémité C en forme de crochet du bras d'essuie-glace 10.

En position montée de l'adaptateur 12 à l'intérieur de la portion d'extrémité C en forme de crochet, la lame formant ressort 60 est montée comprimée longitudinalement de manière à exercer, longitudinalement vers l'arrière, un effort tendant à plaquer la face transversale arrière de butée 58 de l'ergot de verrouillage 56 contre le bord arrière 38 de la lumière de verrouillage 34.

L'étrier principal 14, représenté à titre d'exemple non limitatif à la figure 1, est ici une pièce en tôle découpée et pliée dont la partie centrale est constituée pour l'essentiel par deux joues verticales et longitudinales parallèles 62 dont chacune est délimitée par une face verticale interne 64 entre lesquelles s'étend transversalement une tige d'articulation 66 qui est apte à être reçue dans le logement 52 du corps avant 44 de l'adaptateur 12.

De manière connue, l'assemblage s'effectue ici en mettant d'abord en place l'adaptateur 12 sur la tige d'articulation 66 en emboîtant cette dernière longitudinalement d'arrière en avant jusque dans le logement 52, puis en venant mettre en place la portion d'extrémité en forme de crochet C en U du bras d'essuie-glace 10 dans laquelle l'adaptateur 12 est emboîté longitudinalement, d'arrière en avant, jusqu'à ce que l'ergot de verrouillage 56 pénètre et s'emboîte dans la lumière de verrouillage 34.

Cette opération est réalisée en comprimant légèrement la lame formant ressort 60 et elle est facilitée par le profil avant en forme de rampe inclinée 59 de l'ergot de verrouillage 56 qui coopère avec un bord transversal horizontal supérieur arrière 31 en vis-à-vis du brin inférieur 22 pour provoquer une déformation élastique au moins de la branche 48 inférieure.

Lorsque l'on souhaite procéder au démontage, et donc au déverrouillage de la portion d'extrémité C en forme de crochet du bras d'essuie-glace 10 de l'adaptateur 12, l'opérateur doit agir sur la branche 48, ici inférieure, portant l'ergot 56 pour la déformer verticalement vers le haut et provoquer sa sortie hors de la lumière de verrouillage 34 et ceci ici en agissant sur la languette 54.

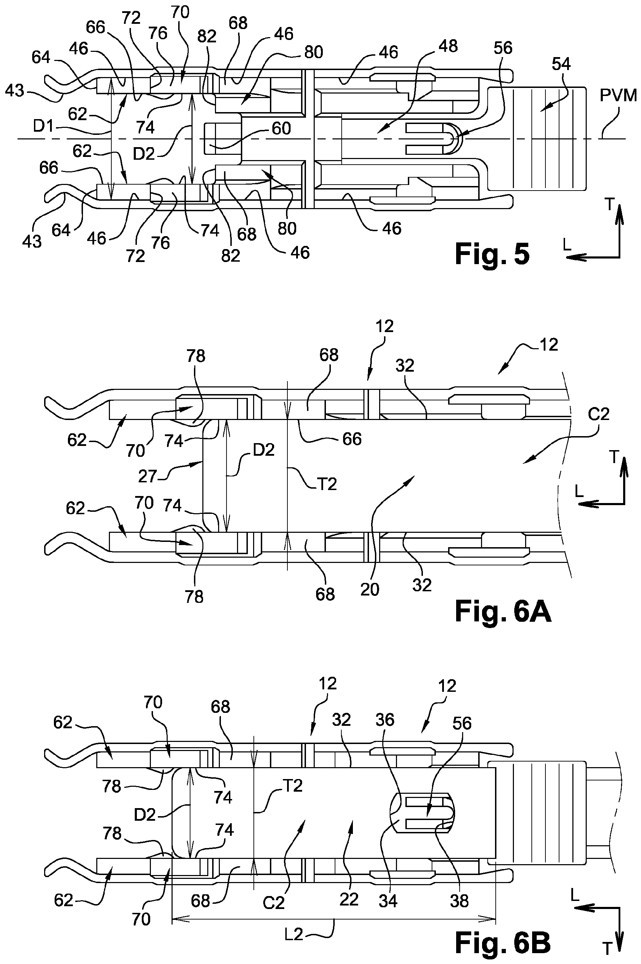

Selon l'exemple de réalisation illustré aux figures 3 et suivantes, l'adaptateur 12 présente une symétrie générale de conception, d'une part, par rapport au plan vertical médian PVM indiqué à la figure 5 et, d'autre part, par rapport au plan horizontal médian PHM indiqué à la figure 4.

Seule la lame formant ressort 60 ne présente pas ici une symétrie de conception par rapport au plan horizontal médian PHM.

Comme on peut le voir plus particulièrement aux figures 3 à 5, l'adaptateur 12 comporte un premier tronçon longitudinal avant, à gauche en considérant ces figures, qui est constitué essentiellement par deux premières joues latérales internes 62 dont chacune est adjacente à une portion associée de la face interne 46 d'une aile latérale associée 40 de l'adaptateur.

Chaque première joue latérale interne 62 est conformée à son extrémité avant en un arc semi-cylindrique convexe 64 et elle est délimitée transversalement vers l'intérieur par une face verticale interne 66.

Outre sa face convexe semi-cylindrique avant 64, chaque première joue latérale interne 62 est délimitée par deux faces longitudinales horizontales externes 68.

La hauteur "h" séparant les deux faces parallèles et horizontales 68 est dimensionnée de manière à permettre l'introduction de l'adaptateur 12 et notamment des premières joues latérales internes 62 entre les faces opposées 22 et 24 de l'extrémité en forme de crochet C séparées de la distance "H", et ceci quasiment sans jeu.

Conformément à l'invention, dans chacune des deux premières joues latérales internes 62 est formée une languette latérale 70 qui est déformable élastiquement. Chaque languette 70 est ici réalisée en une seule pièce par moulage avec l'adaptateur 12.

Chaque languette 70 s'étend longitudinalement librement vers l'arrière à partir de son extrémité avant 72 qui s'étend dans le prolongement de la face avant convexe semi-cylindrique 64.

Chaque languette 70 est délimitée transversalement vers l'intérieur par une facette interne longitudinale et verticale 74.

Les facettes internes verticales 74 de deux languettes 70 transversalement opposées sont séparées l'une de l'autre d'une distance transversale D2 inférieure à la distance transversale D1 comme indiqué notamment aux figures 3 et 5.

Chaque languette 70 est aussi délimitée par une facette externe 76 orientée vers l'extérieur.

Comme on peut le voir notamment aux figures 3 et 4, lorsqu'elle est dans sa position ou état de repos, non déformée élastiquement, chaque languette 70 occupe une position telle que sa facette externe 76 s'étend dans un plan orthogonal au plan vertical et formant un angle par rapport à la face horizontale 68 de la première joue associée 62.

Ainsi, au repos, chaque languette 70 fait saillie hors du plan de la face horizontale 68.

A la figure 4, on a représenté en traits pointillés la position maximale déformée élastiquement qu'est susceptible d'occuper chaque languette 70' dans laquelle chaque facette externe 76' est sensiblement coplanaire à la face horizontale 68 de la première joue latérale interne associée 62. Chaque languette 70 est ainsi « escamotée » en position fléchie.

Dans sa position fléchie par déformation élastique maximale, chaque languette 70' est aussi telle que sa facette externe 76' s'étend dans un plan tangent à une extrémité associée de la partie semi-cylindrique convexe de la première joue latérale interne associée 62.

Longitudinalement en arrière, vers la droite en considérant les figures 3 à 5, l'adaptateur 12 comporte une paire de deuxièmes joues latérales internes transversalement opposées 80 dont chacune est notamment délimitée longitudinalement vers l'avant par une surface cylindrique avant convexe 82 et par une paire de faces horizontales opposées 84.

On décrira maintenant l'utilisation d'un adaptateur 12 selon l'invention telle qu'illustré aux figures 3 à 5 avec des crochets d'extrémité de différentes dimensions.

Aux figures 6A et 6B, l'adaptateur 12 est utilisé avec un crochet C2, dit "deuxième crochet" de largeur transversale T2 réduite, par exemple égale à 9mm, et de longueur L2 dite "courte".

Avec de telles dimensions, ce sont les deuxièmes joues latérales internes 80 qui coopèrent par leurs faces semi-cylindriques convexes avant 82 avec le fond semi-cylindrique concave 28 du crochet C2.

Latéralement ou transversalement, le crochet d'extrémité C2 est maintenu, guidé et centré transversalement par les faces verticales internes 66 des premières joues latérales internes 62, ainsi que par les portions des facettes internes 74 des quatre languettes 70. Les faces latérales externes 32 du crochet C2sont ici reçues latéralement ou transversalement quasiment sans jeu entre les portions correspondantes des faces verticales internes 62 et des facettes internes 74 des quatre languettes 70.

L'ergot 56 de la branche inférieure 48 de la figure 3 est reçu en verrouillage dans la lumière 34 du brin inférieur 22 du crochet d'extrémité C2.

Grâce à la capacité globale de déformation élastique de la branche supérieure 48, celle-ci est déformée élastiquement et l'ergot de verrouillage 56 dont elle est munie est en appui contre une portion pleine en vis-à-vis de la face interne horizontale 24 du brin supérieur 20.

Pour délimiter sa position longitudinale maximale vers l'avant par rapport à l'adaptateur 12, le crochet d'extrémité C2 est susceptible de coopérer, par la face externe convexe de son brin recourbé avant 27, avec une paire de protubérances opposées 78 dont chacune fait saillie transversalement vers l'intérieur au-delà du plan de la face 66.

L'adaptateur 12 comporte ainsi une paire de protubérances 78 transversalement opposées dont chacune est agencée sensiblement au centre d'une première joue latérale 62.

Chaque protubérance 78 est reliée à l'aile latérale associée 40 par une patte de liaison 81 qui la porte à son extrémité libre avant et qui est déformable élastiquement.

Ainsi, chaque protubérance 78 est montée mobile par rapport à l'aile latérale associée 40 qui la porte par l'intermédiaire de la patte 81, entre une position de repos illustrée par exemple aux figures 3 et 4 dans laquelle elle fait saillie transversalement vers l'intérieur au-delà du plan de la face interne verticale 66 de la joue latérale associée 62, et une position fléchie ou escamotée transversalement vers l'extérieur qu'elle est notamment susceptible d'occuper lors des opérations de montage d'un crochet d'extrémité sur un adaptateur 12.

Pour faciliter l'escamotage d'une protubérance 78 lors du montage d'un crochet d'extrémité correspondant, chaque protubérance 78 comporte une facette verticale avant inclinée 77 formant rampe.

Pour assurer sa fonction de verrouillage longitudinal, chaque protubérance 78 comporte une facette verticale arrière 79 inclinée qui est apte à coopérer avec une portion en vis-à-vis d'une face avant convexe 29 d'un crochet d'extrémité.

Ainsi, en section par un plan horizontal, chaque protubérance 78 présente un profil en "V" à deux facettes 77 et 79.

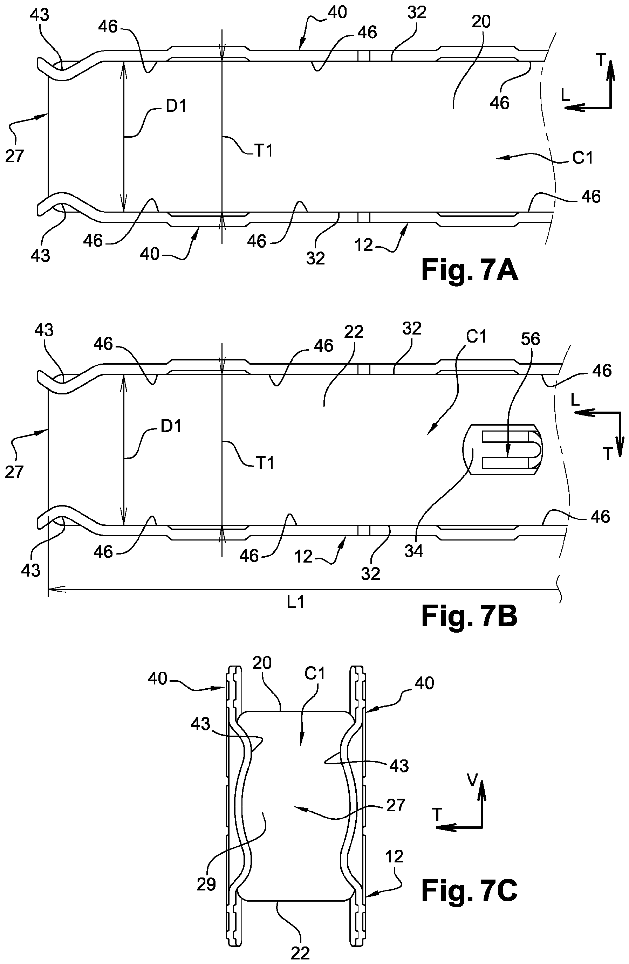

En se reportant aux figures 7A à 7C, on a représenté l'utilisation de l'adaptateur 12 avec un crochet d'extrémité dit "premier crochet" C1 qui, par comparaison avec le deuxième crochet C2, présente une largeur transversale T1 supérieure à la largueur transversale T2, et par exemple égale à 12mm.

Le premier crochet d'extrémité C1 présente aussi une longueur L1 de son brin inférieur 22 supérieure à la précédente longueur L2.

Avec de telles dimensions, ce sont les premières joues latérales internes 62 qui sont reçues à l'intérieur du fond concave 28 du premier crochet C1.

Les faces latérales externes 32 du premier crochet C1 sont ici reçues latéralement ou transversalement quasiment sans jeu entre les portions correspondantes des faces internes 46 des ailes latérales verticales 40.

Les quatre languettes 70 sont déformées élastiquement et coopèrent sous contrainte élastique par leurs facettes externes 76 avec les portions en vis-à-vis des faces horizontales internes 24 et 26 des deux brins opposés supérieurs 20 et inférieurs 22 du premier crochet C1.

A titre d'exemple non limitatif, pour déterminer la position longitudinale maximale vers l'avant du premier crochet C1 par rapport à l'adaptateur 12, chaque aile latérale 40 est ici conformée au voisinage de son extrémité libre avant 42, avec une protubérance triangulaire 43 dont chacune est apte à coopérer avec une portion en vis-à-vis de la surface convexe du brin recourbé 27. Selon une variante non représentée, chaque aile latérale est munie d'une protubérance se présentant sous la forme d'une « surépaisseur » interne de l'aile latérale associée et qui s'étend sensiblement dans un plan vertical et longitudinal.

Selon une autre variante non représentée, il n'est prévu aucune protubérance au voisinage de l'extrémité libre avant de chaque aile latérale.

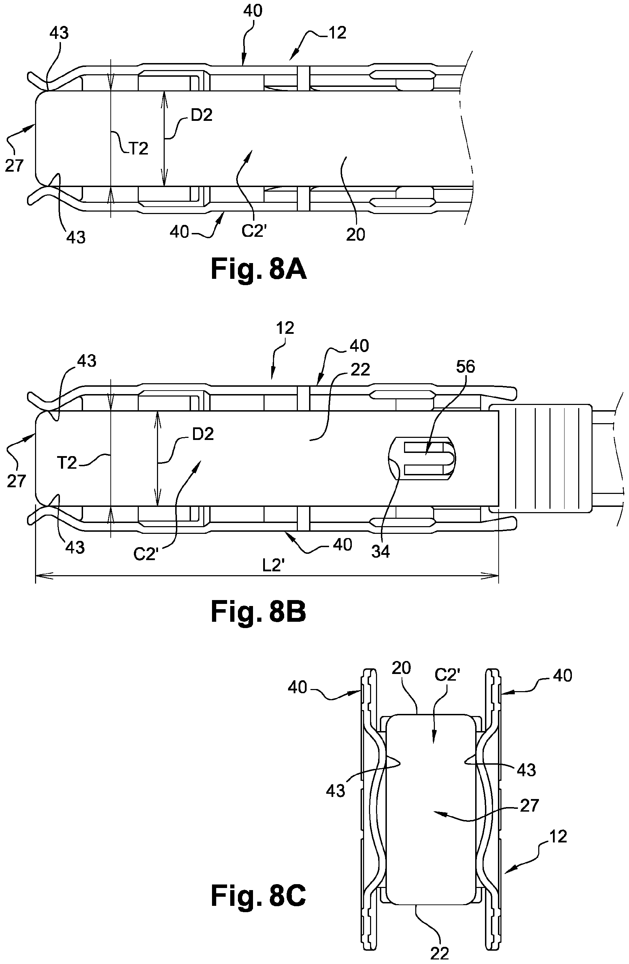

Enfin, à titre complémentaire, on a illustré aux figures 8A à 8C l'utilisation de l'adaptateur 12 selon l'invention avec un crochet d'extrémité C2' analogue au deuxième crochet C2 par sa largeur transversale T2, par exemple égale à 9mm, mais dont la longueur L2' du brin inférieur est dite de grande longueur comme dans le cas du premier crochet C1 illustré aux figures 6A à 6C de longueur L1.

Le maintien latéral ou transversal centré du crochet d'extrémité C2' par rapport à l'adaptateur 12 est réalisé de la même manière que dans le cas du deuxième crochet C2 illustré en référence aux figures 6A et 6B, tandis que son positionnement longitudinal est réalisé de la même manière que pour le premier crochet C1 en référence aux figures 7A et 7B.

Dans la description qui précède, chaque aile latérale est munie d'une paire de languettes 70 agencées symétriquement de part et d'autre du plan horizontal médian. Lorsque l'adaptateur présente aussi une symétrie par rapport au plan vertical médian, PVM, l'adaptateur 12 comporte ainsi quatre languettes 70 agencées selon une double symétrie.

Sans sortir du cadre de l'invention, chaque aile latérale peut comporter deux languettes décalées longitudinalement l'une par rapport à l'autre, toutes les deux en partie « supérieure », ou bien une en partie supérieure et une en partie « inférieure », avec un agencement symétrique ou non pour les deux ailes latérales, en quinconce, etc.

Toutefois, selon l'invention, l'adaptateur 12 comporte au moins deux languettes latérales 70 dont chacune est déformable élastiquement et comporte une facette interne verticale 74, les facettes internes 74 de ces deux languettes 70 étant espacées transversalement l'une de l'autre pour coopérer avec des faces latérales externes opposées d'un deuxième crochet d'extrémité.

L'invention trouve à s'appliquer pour tout type de balai d'essuie-glace et notamment pour des balais dits de type plat (aussi appelés "balai flat blade"), ou dits de type "hybride".

## Revendications

1. Adaptateur (12) pour le raccordement d'un balai d'essuie-glace à une extrémité (C) en forme de crochet en U d'un bras d'essuie-glace, adaptateur comprenant
- deux ailes latérales verticales (40) dont les faces internes (46) en vis-à-vis sont espacées transversalement d'une première distance (D1), pour coopérer avec des faces latérales externes (32) d'un premier crochet d'extrémité (C1) d'une première largeur transversale (T1) ;
- un corps (44) qui s'étend transversalement entre les faces internes des deux ailes ;
**caractérisé en ce qu'**il comporte au moins deux languettes latérales (70) dont chacune est déformable élastiquement et comporte une facette interne verticale (74), les facettes internes (74) des deux languettes (70) sont espacées transversalement l'une de l'autre d'une deuxième distance (D2) inférieure à ladite première distance (D1), pour coopérer avec des faces latérales externes (32) d'un deuxième crochet d'extrémité (C2) d'une deuxième largeur transversale (T2),
et **en ce que** chaque languette (70) est déformable élastiquement entre :
- une position de repos qu'elle occupe lorsque l'adaptateur (44) est reçu dans le fond concave (28) d'un deuxième crochet d'extrémité (C2) de la deuxième largeur transversale (T2) ; et
- une position fléchie qu'elle occupe lorsque l'adaptateur (44) est reçu dans le fond concave (28) d'un premier crochet d'extrémité (C1) de la première largeur transversale (T1).

2. Adaptateur selon la revendication 1, **caractérisé en ce que** chaque languette (70) est adjacente à une face interne (46) d'une aile latérale associée (40).

3. Adaptateur selon l'une quelconque des revendications précédentes, **caractérisé en ce que** chaque languette (70) est déformable élastiquement dans un plan vertical.

4. Adaptateur selon la revendication 1, **caractérisé en ce que** lesdites deux languettes (70) sont agencées transversalement en vis-à-vis l'une de l'autre.

5. Adaptateur selon la revendication 1, **caractérisé en ce que** lesdites facettes (74) des deux languettes sont centrées transversalement par rapport auxdites faces internes (46) des ailes latérales opposées (40).

6. Adaptateur selon la revendication 1, **caractérisé en ce que** chaque languette (70) est délimitée par une facette externe (76) orthogonale à ladite facette interne (74).

7. Adaptateur selon l'une quelconque des revendications 1 à 6, **caractérisé en ce qu'**il comporte un tronçon avant convexe en arc de cylindre formé de deux joues (62) latérales internes transversalement opposées dont chacune est adjacente à une face interne (46) d'une aile latérale associée (40), et **en ce que** chaque languette (70) s'étend dans le prolongement d'une partie associée d'une première joue latérale (62).

8. Adaptateur selon la revendication 7 prise en combinaison avec la revendication 6, **caractérisé en ce que** le tronçon avant convexe est-semi cylindrique, et **en ce que**, dans ladite position fléchie, ladite facette extérieure (76) s'étend dans un plan tangent à une extrémité diamétrale dudit tronçon.

9. Adaptateur selon l'une quelconque des revendications précédentes, **caractérisé en ce qu'**il comporte au moins une branche (48) qui s'étend longitudinalement depuis le corps (44) et qui porte un ergot de verrouillage (56) en saillie destiné à être reçu dans une lumière de verrouillage (34) d'un crochet d'extrémité (C) du bras d'essuie-glace (10).

10. Adaptateur selon la revendication 1, **caractérisé en ce que** le corps (44) comporte un élément élastique (60) destiné à être monté comprimé élastiquement contre une portion en vis-à-vis du fond concave (28) du crochet d'extrémité (C).

11. Adaptateur selon l'une quelconque des revendications précédentes, **caractérisé en ce qu'**il est réalisé en une seule pièce moulée en matière plastique.

12. Adaptateur selon l'une quelconque des revendications précédentes, **caractérisé en ce qu'**il présente une symétrie globale de conception selon un plan vertical médian (PVM).

13. Adaptateur selon l'une quelconque des revendications précédentes, **caractérisé en ce qu'**il présente une symétrie globale de conception selon un plan horizontal médian (PHM).

14. Ensemble comprenant un bras d'essuie-glace (10) comportant une extrémité (C) en forme de crochet en U et un adaptateur (12) selon l'une quelconque des revendications précédentes.

## Patentansprüche

1. Adapter (12) zum Anschluss eines Scheibenwischerarms an ein Ende (C) in Form eines U-förmigen Hakens eines Scheibenwischerarms, der Adapter umfassend:
- zwei vertikale Seitenflügel (40), deren gegenüberliegende Innenseiten (46) in Querrichtung um einen ersten Abstand (D1) beabstandet sind, um mit äußeren Seitenflächen (32) eines ersten Endhakens (C1) einer ersten Querbreite (T1) zusammenzuwirken;
- einen Körper (44), der sich in Querrichtung zwischen den Innenseiten der zwei Flügel erstreckt; **dadurch gekennzeichnet, dass** er mindestens zwei vertikale seitliche Laschen (70) aufweist, von denen jede elastisch verformbar ist und eine vertikale innere Facette (74) aufweist, die inneren Facetten (74) der zwei Laschen (70) in Querrichtung um einen zweiten Abstand (D2) voneinander beabstandet sind, der kleiner als der erste Abstand (D1) ist, um mit äußeren Seitenflächen (32) eines zweiten Endhakens (C2) einer zweiten Querbreite (T2) zusammenzuwirken, und dadurch, dass jede Lasche (70) zwischen folgenden Positionen elastisch verformbar ist:
- einer Ruheposition, die sie einnimmt, wenn der Adapter (44) in dem konkaven Boden (28) eines zweiten Endhakens (C2) der zweiten Querbreite (T2) aufgenommen ist; und
- einer gebogenen Position, die sie einnimmt, wenn der Adapter (44) in dem konkaven Boden (28) eines ersten Endhakens (C1) der ersten Querbreite (T1) aufgenommen ist.

2. Adapter nach Anspruch 1, **dadurch gekennzeichnet, dass** jede Lasche (70) einer Innenseite (46) eines zugehörigen Seitenflügels (40) benachbart ist.

3. Adapter nach einem der vorhergehenden Ansprüche, **dadurch gekennzeichnet, dass** jede Lasche (70) in einer vertikalen Ebene elastisch verformbar ist.

4. Adapter nach Anspruch 1, **dadurch gekennzeichnet, dass** die zwei Laschen (70) in Querrichtung einander gegenüberliegend angeordnet sind.

5. Adapter nach Anspruch 1, **dadurch gekennzeichnet, dass** die Facetten (74) der zwei Laschen in Querrichtung bezogen auf die Innenseiten (46) der gegenüberliegenden Seitenflügel (40) zentriert sind.

6. Adapter nach Anspruch 1, **dadurch gekennzeichnet, dass** jede Lasche (70) von einer äußeren Facette (76), die orthogonal zu der inneren Facette (74) verläuft, begrenzt wird.

7. Adapter nach einem der Ansprüche 1 bis 6, **dadurch gekennzeichnet, dass** er einen zylinderbogenförmigen konvexen vorderen Abschnitt aufweist, der von zwei inneren seitlichen Backen (62) gebildet ist, die sich in Querrichtung gegenüberliegen, von denen jede einer Innenseite (46) eines zugehörigen Seitenflügels (40) benachbart ist, und dadurch, dass sich jede Lasche (70) in der Verlängerung eines Bereich erstreckt, der mit einer ersten seitlichen Backe (62) in Verbindung steht.

8. Adapter nach Anspruch 7 zusammen mit Anspruch 6, **dadurch gekennzeichnet, dass** der konvexe vordere Abschnitt halbzylindrisch ist, und dadurch, dass sich in der gebogenen Position die äußere Facette (76) in einer Ebene erstreckt, die ein diametrales Ende des Abschnitts tangiert.

9. Adapter nach einem der vorhergehenden Ansprüche, **dadurch gekennzeichnet, dass** er mindestens einen Bügel (48) aufweist, der sich in Längsrichtung von dem Körper (44) erstreckt und der eine hervorstehende Verriegelungsnoppe (56) trägt, die dazu bestimmt ist, in einer Verriegelungsöffnung (34) eines Endhakens (C) des Scheibenwischerarms (10) aufgenommen zu sein.

10. Adapter nach Anspruch 1, **dadurch gekennzeichnet, dass** der Körper (44) ein elastisches Element (60) aufweist, das dazu bestimmt ist, elastisch gegen einen Abschnitt gegenüber des konkaven Bodens (28) des Endhakens (C) gedrückt angebracht zu sein.

11. Adapter nach einem der vorhergehenden Ansprüche, **dadurch gekennzeichnet, dass** er in einem Stück ausgeführt ist, das aus Kunststoff geformt ist.

12. Adapter nach einem der vorhergehenden Ansprüche, **dadurch gekennzeichnet, dass** er eine allgemeine Symmetrie der Ausgestaltung entsprechend einer vertikalen Mittelebene (PVM) aufweist.

13. Adapter nach einem der vorhergehenden Ansprüche, **dadurch gekennzeichnet, dass** er eine allgemeine Symmetrie der Ausgestaltung entsprechend einer horizontalen Mittelebene (PHM) aufweist.

14. Anordnung umfassend einen Scheibenwischerarm (10), der ein Ende (C) in Form eines U-förmigen Hakens und einen Adapter (12) nach einem der vorhergehenden Ansprüche aufweist.

## Claims

1. Adapter (12) for attaching a windscreen wiper to a U-shaped hooked end (C) of a windscreen wiper arm, said adapter comprising:
- two vertical lateral wings (40), the facing internal faces (46) of which are spaced apart transversely by a first distance (D1), in order to cooperate with external lateral faces (32) of a first end hook (C1) having a first transverse width (T1);
- a body (44) which extends transversely between the internal faces of the two wings;
**characterized in that** it has at least two lateral tags (70), each of which is elastically deformable and has a vertical internal facet (74), the internal facets (74) of the two tags (70) are spaced apart transversely by a second distance (D2) less than said first distance (D1), in order to cooperate with external lateral faces (32) of a second end hook (C2) having a second transverse width (T2), and **in that** each tag (70) is elastically deformable between:
- a rest position that it takes up when the adapter (44) is received in the concave closed end (28) of a second end hook (C2) having the second transverse width (T2); and
- a flexed position that it takes up when the adapter (44) is received in the concave closed end (28) of a first end hook (C1) having the first transverse width (T1).

2. Adapter according to Claim 1, **characterized in that** each tag (70) is adjacent to an internal face (46) of an associated lateral wing (40).

3. Adapter according to one of the preceding Claims, **characterized in that** each tag (70) is elastically deformable in a vertical plane.

4. Adapter according to Claim 1, **characterized in that** said two tags (70) are arranged in a manner transversely facing one another.

5. Adapter according to Claim 1, **characterized in that** said facets (74) of the two tags are centred transversely with respect to said internal faces (46) of the opposing lateral wings (40).

6. Adapter according to Claim 1, **characterized in that** each tag (70) is delimited by an external facet (76) orthogonal to said internal facet (74).

7. Adapter according to any one of Claims 1 to 6, **characterized in that** it has a convex front portion in the form of a cylindrical arch, formed by two transversely opposing internal lateral flanges (62), each of which is adjacent to an internal face (46) of an associated lateral wing (40), and **in that** each tag (70) extends in line with an associated part of a first lateral flange (62).

8. Adapter according to Claim 7 in combination with Claim 6, **characterized in that** the convex front portion is semi-cylindrical, and **in that**, in said flexed position, said external facet (76) extends in a plane tangent to a diametrical end of said portion.

9. Adapter according to any one of the preceding claims, **characterized in that** it has at least one branch (48) which extends longitudinally from the body (44) and which carries a protruding locking peg (56) that is intended to be received in a locking slot (34) in an end hook (C) of the windscreen wiper arm (10).

10. Adapter according to Claim 1, **characterized in that** the body (44) has an elastic element (60) that is intended to be mounted in a manner elastically compressed against a facing portion of the concave closed end (28) of the end hook (C).

11. Adapter according to any one of the preceding claims, **characterized in that** it is produced in one piece as a plastics moulding.

12. Adapter according to any one of the preceding claims, **characterized in that** it has overall symmetry of design in a vertical mid-plane (PVM).

13. Adapter according to any one of the preceding claims, **characterized in that** it has overall symmetry of design in a horizontal mid-plane (PHM).

14. Assembly comprising a windscreen wiper arm (10) having a U-shaped hooked end (C) and an adapter (12) according to any one of the preceding claims.
